# EUROPEAN PATENT SPECIFICATION

(11) **EP 3 563 936 B1**
(45) Date of publication and mention of the grant of the patent: **28.01.2026**
(21) Application number: 19171879.0
(22) Date of filing: 30.04.2019
(51) Int. Cl.: B05D 3/06, B05D 7/14, B05D 1/28, B05D 7/00

(54) **HOME APPLIANCE AND METHOD OF MANUFACTURING THE SAME**
HAUSHALTSGERÄT UND VERFAHREN ZUR HERSTELLUNG DAVON
APPAREIL DOMESTIQUE ET SON PROCÉDÉ DE FABRICATION

(30) Priority: 30.04.2018 KR 20180049990
(43) Date of publication of application: 06.11.2019
(60) Divisional application: 21166133.5
(73) Proprietor: Samsung Electronics Co., Ltd., Suwon-si, Gyeonggi-do (KR)
(72) Inventor: Sung, Do Soo, 16677 Suwon-si, Gyeonggi-do (KR); Koh, Young Deog, 16677 Suwon-si, Gyeonggi-do (KR); Kim, Sung Wook, 16677 Suwon-si, Gyeonggi-do (KR); Kim, Yong Hwan, 16677 Suwon-si, Gyeonggi-do (KR); Kim, Choong Keon, 16677 Suwon-si, Gyeonggi-do (KR); Lee, Seok, 16677 Suwon-si, Gyeonggi-do (KR)
(74) Representative: Gulde & Partner

(56) References cited:
- EP-A1- 0 575 798
- EP-A1- 3 045 233
- EP-A2- 2 377 901
- WO-A1-2006/028027
- DE-A1- 102006 000 234
- FR-A1- 2 419 162
- US-A- 2 385 332
- US-A- 2 533 351
- US-A- 3 924 022
- US-A- 4 032 673
- US-A1- 2002 110 692
- US-A1- 2014 357 016

## Description

### BACKGROUND

### 1. Technical Field

The disclosure relates to a home appliance and a method of manufacturing the same, and more particularly, to a home appliance having an improved structure to provide anti-fingerprinting properties and a method of manufacturing the same.

### 2. Description of the Related Art

Generally, stainless steel is excellent in rigidity and corrosion resistance, and thus is often used as a material for forming an outer appearance of a home appliance such as a refrigerator and an oven.

Conventionally, the surface of stainless steel is coated with polyester and acrylic type paints in order to provide anti-fingerprinting properties to the surface of the stainless steel that forms the outer appearance of a home appliance. When polyester and acrylic type paints are used on the surface of stainless steel, it is required to be thermally dried to cure the paints. In the process of heat drying, the stainless steel may be yellowed by high temperature oxidation.

Also, conventionally, a complicated and long-time process is required to coat the surface of stainless steel. As an example, coil-type stainless steel is required to undergo a number of pretreatment, coating, and heat drying processes after the input of the coil-type stainless steel.

Recently, various stainless steel surface coating methods that may replace the conventional surface coating method of stainless steel have been actively studied.

For instance, US 3 924 022 A discloses a steel surface coating.

Further reference is made to US 4 032 673 A and US 2 385 332 A.

### SUMMARY

It is an aspect of the disclosure to provide a home appliance having an improved structure to improve anti-fingerprinting and anti-scratch properties of an outer appearance thereof and a method of manufacturing the same.

It is another aspect of the disclosure to provide a home appliance, an outer appearance of which is provided with a thin film coating layer, and a method of manufacturing the same.

Additional aspects of the disclosure will be set forth in part in the description which follows and, in part, will be obvious from the description, or may be learned by practice of the disclosure.

In accordance with an aspect of the disclosure, a home appliance includes a main body including an internal space, a door provided to open and close the internal space, and a coating layer formed on at least one of the main body and the door, wherein the coating layer includes a first layer provided to cover the surface of at least one of the main body and the door and including silicon oxide, and a second layer provided to cover the first layer with an ultraviolet curing paint including an amino silane coupling agent, wherein the main body and/or the door are made of stainless steel.

A passive film layer may be formed on the surface of at least one of the main body and the door, and the first layer may be formed on the passive film layer.

The coating layer may have a thickness of 1µm or more and 2µm or less.

The ultraviolet curing paint may further include an oligomer, and the oligomer may include a urethane acrylate.

The oligomer may have a weight ratio (%) of 20 or more and 35 or less based on a weight ratio (%) of 100 of the ultraviolet curing paint.

The oligomer may include a 9-functional urethane acrylate having a weight ratio (%) of 10 or more and 15 or less based on a weight ratio (%) of 100 of the ultraviolet curing paint, a 6-functional urethane acrylate having a weight ratio (%) of 10 or more and 15 or less based on a weight ratio (%) of 100 of the ultraviolet curing paint, and a 2-functional urethane acrylate having a weight ratio (%) of 5 or less based on a weight ratio (%) of 100 of the ultraviolet curing paint.

The silane coupling agent may have a weight ratio (%) of 3 or less based on a weight ratio (%) of 100 of the ultraviolet curing paint.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a first exemplary view of a home appliance according to an embodiment of the disclosure;
FIG. 2 is a second exemplary view of the home appliance according to an embodiment of the disclosure;
FIG. 3 is a view schematically illustrating a coating structure of the home appliance according to an embodiment of the disclosure;
FIG. 4 is an enlarged view of the coating structure of FIG. 3;
FIG. 5 is a table illustrating components of an ultraviolet curing paint in the home appliance according to an embodiment of the disclosure;
FIG. 6 is a table comparing adhesion and alkali resistance properties according to the type of a silane coupling agent in the home appliance according to an embodiment of the disclosure;
FIG. 7 is a table illustrating the adhesion properties, the alkali resistance properties, workability, and protective vinyl peelability when a coating layer including a first layer and a second layer is applied to the surface of an outer appearance of the home appliance according to an embodiment of the disclosure;
FIG. 8 is a schematic view illustrating a method of manufacturing the home appliance according to an embodiment of the disclosure;
FIG. 9 is a block diagram illustrating the method of manufacturing the home appliance according to an embodiment of the disclosure; and
FIG. 10 is a block diagram illustrating a method of controlling the amount of ultraviolet rays during a coating layer curing process in the method of manufacturing the home appliance according to an embodiment of the disclosure.

### DETAILED DESCRIPTION

Hereinafter, preferred embodiments of the disclosure will be described in detail with reference to the accompanying drawings. The terms "front end," "rear end," "upper portion," "lower portion," "upper end" and "lower end" used in the following description are defined with reference to the drawings, and the shape and position of each component are not limited by these terms.

A coating layer may be formed on the surface of an outer appearance of a home appliance to ensure anti-fingerprinting and anti-scratch properties. The home appliance may include a main body having an internal space and a door provided to open and close the internal space. The main body and the door may form the outer appearance of the home appliance. The coating layer may be formed on at least one of the main body and the door. Specifically, the coating layer may be formed on the surface of at least one of the main body and the door which are exposed to the outside. The home appliance may include a refrigerator, an oven, and the like, but the type thereof is not limited to the above example. Hereinafter, a refrigerator and an oven will be described as an example of a home appliance to which a coating layer is applied.

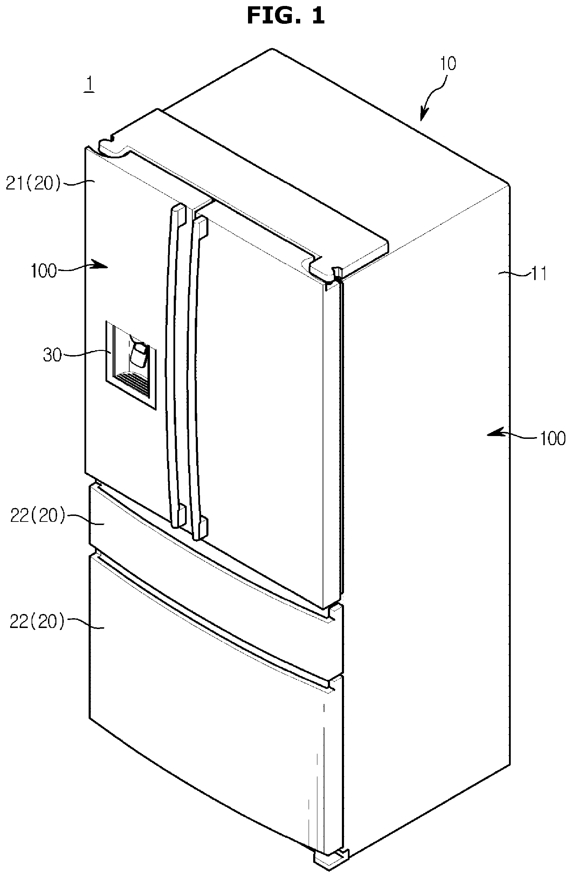

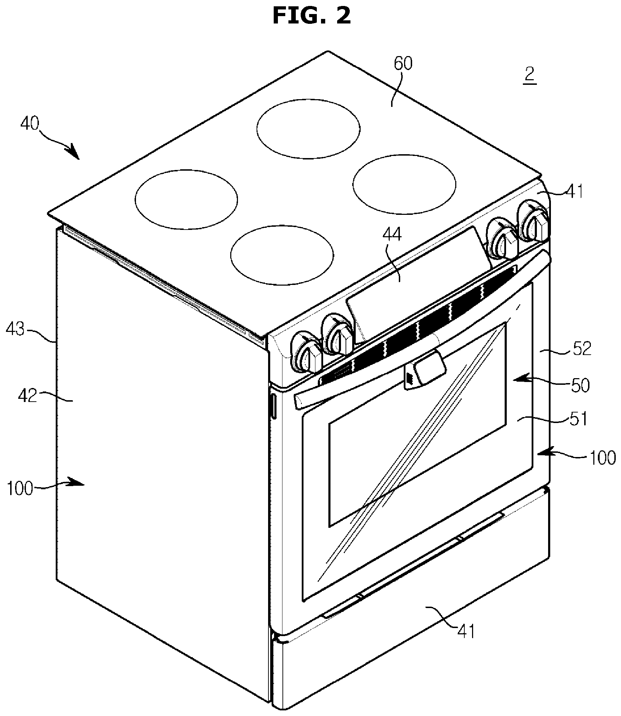

FIG. 1 is a first exemplary view of a home appliance according to an embodiment of the disclosure, and FIG. 2 is a second exemplary view of the home appliance according to an embodiment of the disclosure.

As illustrated in FIG. 1, a refrigerator 1 may include a main body 10, a storage room (not shown) formed inside of the main body 10, a door 20 provided to open and close the storage compartment, and a cool air supply apparatus provided to supply cool air to the storage room.

The cool air supply apparatus may include an evaporator, a compressor, a condenser, an expander, and the like so that evaporation and compression of refrigerant may be performed cyclically.

The main body 10 may include an inner case (not shown) forming the storage room, an outer case 11 coupled to the outside of the inner case, and an insulator (not shown) provided between the inner case and the outer case 11.

The inner case may be formed by being injection molded with a plastic material, and the outer case 11 may be formed of a metal material. The outer case 11 is formed of stainless steel. A urethane foam insulator is used as the insulator, and a vacuum insulator may be used together as needed.

The door 20 may include a refrigerator door 21 provided to open and close a refrigerator compartment of the storage room and a freezer door 22 provided to open and close a freezer compartment of the storage room. As an example, the door 20 is formed of stainless steel.

The refrigerator 1 may further include a dispenser 30 provided to be able to dispense water or ice to the outside of the main body 10. The dispenser 30 may be provided on the refrigerator door 21.

A coating layer 100 may be formed on at least one of the main body 10 and the door 20 of the refrigerator 1 to ensure anti-fingerprinting and anti-scratch properties. Specifically, the coating layer 100 may be formed on at least one of the outer case 11 and the door 20 which are exposed to the outside.

As illustrated in FIG. 2, an oven 2 may include a main body 40, a cooking chamber (not shown), a door 50 provided to open and close the cooking chamber, and a cooktop 60 provided at an upper end portion of the main body 40 to heat food to be cooked.

The main body 40 may include a front panel 41 forming a front surface of the main body 40, a side panel 42 forming side surfaces of the main body 40, and a rear panel 43 forming a rear surface of the main body 40. The front panel 41 may be provided with a display module 44 that displays information on various operations of the oven 2 and allows a user to input operation commands.

The door 50 may include a see-through portion 51 and a door frame 52 on which the see-through portion 51 is installed. The see-through portion 51 may be made of a transparent material such as glass so that the cooking process of the inside of the cooking chamber may be externally confirmed. The door frame 52 is made of stainless steel to be capable of supporting the see-through portion 51.

The coating layer 100 may be formed on at least one of the main body 40 and the door 50 of the oven 2 to ensure the anti-fingerprinting and anti-scratch properties. Specifically, the coating layer 100 may be formed on the surface of at least one of the main body 40 and the door frame 52 which are exposed to the outside. Particularly, the coating layer 100 may be formed on the surface of at least one of the front panel 41, the side panel 42 and the door frame 52.

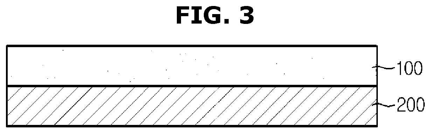

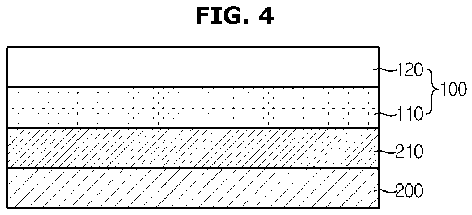

FIG. 3 is a view schematically illustrating a coating structure of the home appliance according to an embodiment of the disclosure, and FIG. 4 is an enlarged view of the coating structure of FIG. 3.

As illustrated in FIGS. 3 and 4, the coating layer 100 may be formed on a steel sheet 200 forming the outer appearance of a home appliance. The steel sheet 200 may be used to form at least one of the main body and the door of the home appliance. Particularly, the steel sheet 200 include stainless steel. That is, the steel sheet 200 is made of stainless steel.

The coating layer 100 may include a first layer 110 provided to cover the surface of the steel sheet 200 and a second layer 120 provided to cover the first layer 110. That is, the coating layer 100 may be laminated on the steel sheet 200 such that the first layer 110 is positioned between the steel sheet 200 and the second layer 120.

The first layer 110 of the coating layer 100 may include silicon oxide. Particularly, the first layer 110 of the coating layer 100 may include silicon dioxide (SiO₂).

The second layer 120 of the coating layer 100 may be formed by an ultraviolet curing paint. Specifically, the second layer 120 of the coating layer 100 may be formed by the ultraviolet curing paint including a silane coupling agent.

A passive film layer 210 may be formed on the surface of the steel sheet 200. Specifically, the passive film layer 210 may be formed on the surface of the steel sheet 200 that is exposed to the outside. The steel sheet 200 made of stainless steel may contain chromium (Cr). The passive film layer 210 may be formed in the form of a thin film on the surface of the steel sheet 200 by combining chromium (Cr) with oxygen in the air. The passive film layer 210 serves to prevent the surface of the steel sheet 200 from being corroded.

The coating layer 100 may be formed on the passive film layer 210. Specifically, the first layer 110 of the coating layer 100 may be formed on the passive film layer 210.

The coating layer 100 may have a thin film form. Particularly, the coating layer 100 may have a thickness of 3µm or less. More particularly, the coating layer 100 may have a thickness of 1µm or more and 2µm or less.

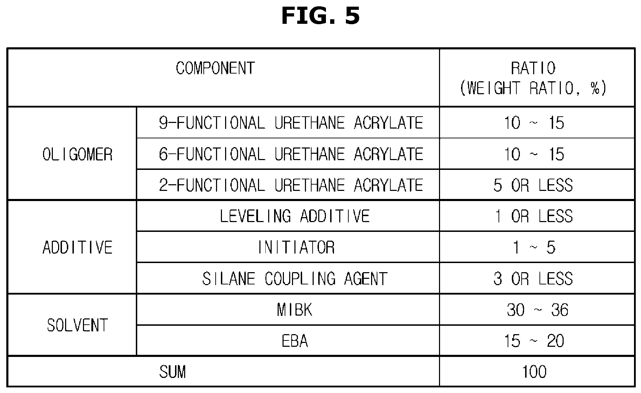

FIG. 5 is a table illustrating components of an ultraviolet curing paint in the home appliance according to an embodiment of the disclosure.

As may be seen from FIG. 5, the ultraviolet curing paint may include the silane coupling agent. Particularly, the silane coupling agent may have a weight ratio (%) of 3 or less based on a weight ratio (%) of 100 of the ultraviolet curing paint. The silane coupling agent includes an amino silane coupling agent.

The ultraviolet curing paint may further include an oligomer. The oligomer may have a weight ratio (%) of 20 or more and 35 or less based on a weight ratio (%) of 100 of the ultraviolet curing paint.

The oligomer may include at least one of a 9-functional urethane acrylate, a 6-functional urethane acrylate, and a 2-functional urethane acrylate. Particularly, the oligomer may include at least one of the 9-functional urethane acrylate having a weight ratio (%) of 10 or more and 15 or less based on a weight ratio (%) of 100 of the ultraviolet curing paint, the 6-functional urethane acrylate having a weight ratio (%) of 10 or more and 15 or less based on a weight ratio (%) of 100 of the ultraviolet curing paint, and the 2-functional urethane acrylate having a weight ratio (%) of 5 or less based on a weight ratio (%) of 100 of the ultraviolet curing paint.

The ultraviolet curing paint may further include an initiator and leveling additives. Particularly, the initiator may have a weight ratio (%) of 1 or more and 5 or less based on a weight ratio (%) of 100 of the ultraviolet curing paint. The leveling additives may have a weight ratio (%) of 1 or less based on a weight ratio (%) of 100 of the ultraviolet curing paint.

The ultraviolet curing paint may further include a solvent. The solvent may have a weight ratio (%) of 45 or more and 56 or less based on a weight ratio (%) of 100 of the ultraviolet curing paint. The solvent may include at least one of methyl isobutyl ketone (MIBK) and ethylene glycol butyl ether acetate (EBA). Particularly, the solvent may include the methyl isobutyl ketone having a weight ratio (%) of 30 or more and 36 or less based on a weight ratio (%) of 100 of the ultraviolet curing paint, and the ethylene glycol butyl ether acetate having a weight ratio (%) of 15 or more and 20 or less based on a weight ratio (%) of 100 of the ultraviolet curing paint.

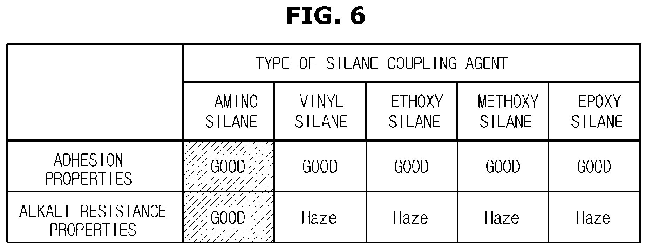

FIG. 6 is a table comparing adhesion and alkali resistance properties according to the type of a silane coupling agent in the home appliance according to an embodiment of the disclosure. In FIG. 6, "adhesion properties" indicate the degree of a coupling force or an adhesion force of the coating layer 100 to the steel sheet 200, and "alkali resistance properties" indicate whether or not the steel sheet 200 is discolored or deformed by a detergent. As an example, good alkali resistance properties mean that the steel sheet 200 and the coating layer 100 are firmly coupled, and thus the detergent does not discolor or deform the steel sheet 200.

As may be seen from FIG. 6, it is advantageous that the silane coupling agent includes an amino silane coupling agent. As a result of testing and comparing the amino silane coupling agent, a vinyl silane coupling agent, an ethoxy silane coupling agent, a methoxy silane coupling agent, and the epoxy silane coupling agent, it was confirmed that when the amino silane coupling agent was used, both of the adhesion and alkali resistance properties were good.

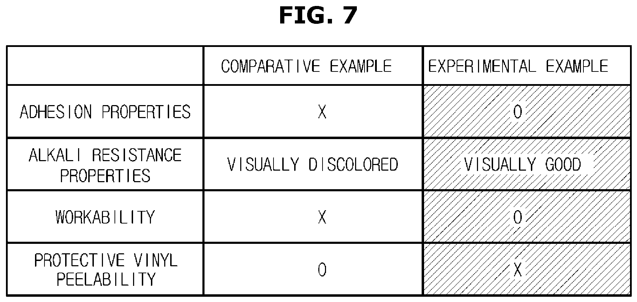

FIG. 7 is a table illustrating the adhesion properties, the alkali resistance properties, workability, and protective vinyl peelability when a coating layer including a first layer and a second layer is applied to the surface of an outer appearance of the home appliance according to an embodiment of the disclosure. In the table of FIG. 7, "comparative example" illustrates a case where a coating layer including only a second layer is applied to the surface of a steel sheet forming the outer appearance of the home appliance, and "experimental example" illustrates a case in which a coating layer including a first layer and a second layer is applied to the surface of a steel sheet forming the outer appearance of the home appliance. In FIG. 7, "adhesion properties" indicate the degree of a coupling force or an adhesion force of the coating layer 100 to the steel sheet 200, and the "workability" indicates whether or not the coating layer 100 is damaged or the coating layer 100 is separated from the steel sheet 200 when the steel sheet 200 having the coating layer 100 is bent. The "protective vinyl peelability" indicates whether or not the coating layer 100 is separated from the steel sheet 200 together with the protective vinyl when the protective vinyl attached on the coating layer 100 to protect the coating layer 100 is removed. Accordingly, having the "protective vinyl peelability" means that the coating layer 100 is separated from the steel sheet 200 together with the protective vinyl. The "alkali resistance properties" indicate whether or not the steel sheet 200 is discolored or deformed by a detergent. As an example, the good "alkali resistance properties" mean that the steel sheet 200 and the coating layer 100 are firmly coupled and thus the detergent does not discolor or deform the steel sheet 200.

As may be seen from FIG. 7, in the case of the "comparative example," although the adhesion properties are good, the alkali resistance properties, workability and protective vinyl peelability are insufficient. On the other hand, in the case of the "experimental example," not only the adhesion properties but also the alkali resistance properties, workability and protective vinyl peelability are all good. This is because, in the case of the "experimental example," the coupling force between the steel sheet 200 and the first layer 110 of the coating layer 100 is improved by the action of the silane coupling agent. That is, this is because, in the case of the "experimental example," the coupling force between the passive film layer 210 formed on the steel sheet 200 and the first layer 110 of the coating layer 100 is improved by the action of the silane coupling agent.

Hereinafter, a method of manufacturing a home appliance will be described in detail.

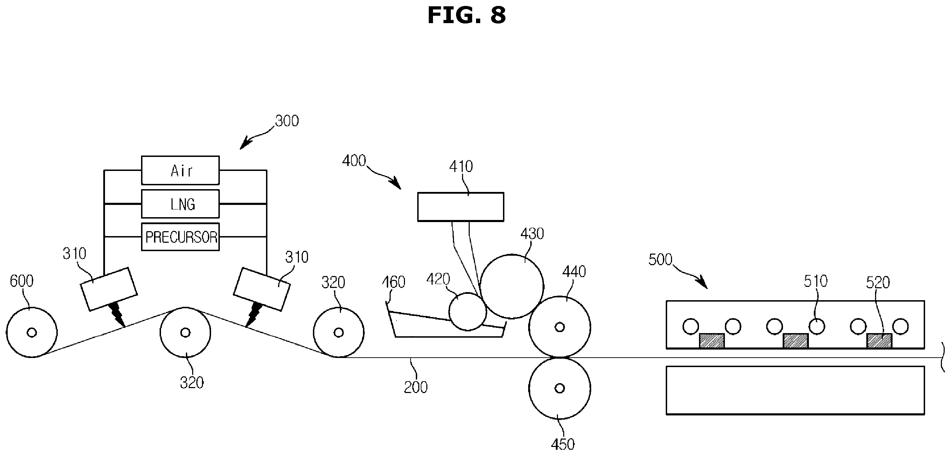

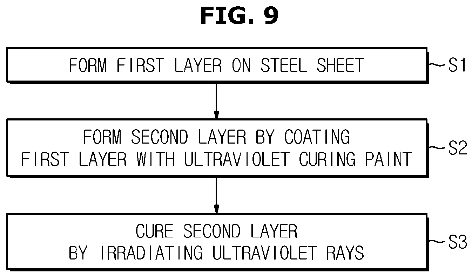

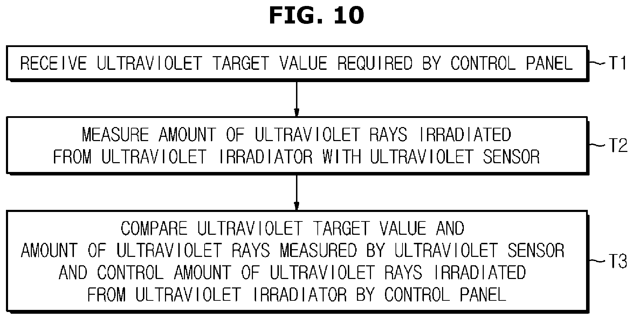

FIG. 8 is a schematic view illustrating a method of manufacturing the home appliance according to an embodiment of the disclosure, FIG. 9 is a block diagram illustrating the method of manufacturing the home appliance according to an embodiment of the disclosure, and FIG. 10 is a block diagram illustrating a method of controlling the amount of ultraviolet rays during a coating layer curing process in the method of manufacturing the home appliance according to an embodiment of the disclosure.

As illustrated in FIGS. 8 and 9, a method of manufacturing the home appliance may include forming the first layer 110 on the surface of the steel sheet 200 forming the outer appearance of the home appliance (S1), forming the second layer 120 by coating the first layer 110 with an ultraviolet curing paint (S2), and curing the second layer 120 by irradiating ultraviolet rays (S3). The formation of the first layer 110 on the surface of the steel sheet 200 may be referred to as a "pretreatment process," and the formation of the second layer 120 on the first layer 110 may be referred to as a "coating process." The curing of the second layer 120 may be referred to as a "curing process."

Each process will be described in detail below.

### Pretreatment process

The method of manufacturing the home appliance may include forming the first layer 110 including silicon oxide on the surface of the steel sheet 200 forming the outer appearance of the home appliance. Specifically, the method of manufacturing the home appliance may include forming the first layer 110 including silicon dioxide on the surface of the steel sheet 200 forming the outer appearance of the home appliance. As such, by forming the first layer 110 on the surface of the steel sheet 200, the surface energy of the steel sheet 200 may be increased to improve the adhesion force.

The method of manufacturing the home appliance may further include forming the first layer 110 by flame-treating the surface of the steel sheet 200. The flame treatment on the surface of the steel sheet 200 may be accomplished by at least one heating device 310. The at least one heating device 310 may include a burner, but the type of the at least one heating device 310 is not limited to the above example. As such, by flame-treating the surface of the steel sheet 200, oil and foreign matter may be removed from the surface of the steel sheet 200.

The method of manufacturing the home appliance may further include supplying air, gas, and a precursor to the surface of the steel sheet 200. As an example, the gas may include LNG. As an example, the precursor may include a silane of a silicon compound.

### Coating process

The method of manufacturing the home appliance may include forming the second layer 120 by coating the first layer 110 with an ultraviolet curing paint including a silane coupling agent.

The method of manufacturing the home appliance may further include supplying the ultraviolet curing paint from a paint supply device 410 to one point between a first transfer roll 420 and a second transfer roll 430, and coating the surface of the steel sheet 200 with the ultraviolet curing paint supplied by a roll coater 440 rotating in contact with the second transfer roll 430.

A portion of the ultraviolet curing paint supplied to the one point between the first transfer roll 420 and the second transfer roll 430 may be transferred to the surface of the steel sheet 200 by the roll coater 440 and used to coat the surface of the steel sheet 200. The remaining portion of the ultraviolet curing paint supplied to the one point between the first transfer roll 420 and the second transfer roll 430 may be collected in a paint collector 460. The ultraviolet curing paint collected in the paint collector 460 may be supplied again to the paint supply device 410 and used to coat the surface of the steel sheet 200, and thus the waste of ultraviolet curing paint may be reduced.

When the coating process is performed in the above-described manner, the coating layer 100 in the form of a thin film having a uniform thickness of 1µm or more and 2µm or less may be easily formed and consumption of the ultraviolet curing paint may be minimized.

### Curing process

The method of manufacturing the home appliance may include curing the second layer 120 by irradiating ultraviolet rays. The method of manufacturing the home appliance may further include curing the second layer 120 by passing the steel sheet 200 through a curing apparatus 500 provided with an ultraviolet irradiator 510 and an ultraviolet sensor 520. The amount of ultraviolet rays irradiated from the ultraviolet irradiator 510 may be automatically controlled by a control panel (not shown) of the curing apparatus 500. Hereinafter, a method of controlling the amount of ultraviolet rays during the curing process will be described in detail with reference to FIG. 10. However, the method of controlling the amount of the ultraviolet rays during the curing process is not limited to the following example, but may be variously changed.

As illustrated in FIG. 10, the method of manufacturing the home appliance may further include receiving an ultraviolet target value required by the control panel of the curing apparatus 500 to cure the second layer 120 of the coating layer 100 (T1).

The method of manufacturing the home appliance may further include measuring the amount of ultraviolet rays irradiated from the ultraviolet irradiator 510 with the ultraviolet sensor 520 (T2).

The method of manufacturing the home appliance may further include comparing the ultraviolet target value and the amount of ultraviolet rays measured by the ultraviolet sensor 520 and controlling the amount of ultraviolet rays irradiated from the ultraviolet irradiator 510 by the control panel of the curing apparatus 500 (T3).

Particularly, the curing apparatus 500 may be provided with a plurality of the ultraviolet irradiators 510 and a plurality of the ultraviolet sensors 520. The plurality of ultraviolet irradiators 510 and the plurality of ultraviolet sensors 520 may be installed to be adjacent to each other.

The ultraviolet irradiator 510 may include an ultraviolet lamp. However, it is sufficient if the ultraviolet irradiator 510 may irradiate ultraviolet rays, and the type thereof is not limited to the ultraviolet lamp.

As illustrated in FIG. 8, the process of forming the coating layer 100 on the surface of the steel sheet 200 may be performed by a roll-to-roll method. That is, the process of forming the first layer 110, the process of forming the second layer 120, and the process of curing the second layer 120 may be performed by the roll-to-roll method. In other words, the pretreatment process, the coating process, and the curing process may be all performed by the roll-to-roll method.

The steel sheet 200 may be transferred to a pretreatment apparatus 300 for forming the first layer 110 of the coating layer 100 by a feeding roller 600. Air, gas, and a precursor for forming the first layer 110 may be supplied to the steel sheet 200 in the pretreatment apparatus 300. Also, the steel sheet 200 may be flame treated by the at least one heating device 310 in the pretreatment apparatus 300. The steel sheet 200 transferred to the pretreatment apparatus 300 may be cooled by at least one cooling roller 320 and be simultaneously transferred to the coating apparatus 400. The steel sheet 200 transferred to the coating apparatus 400 may be coated with the ultraviolet curing paint while passing between the roll coater 440 and a guide roller 450 rotated by the contact with the roll coater 440. That is, the second layer 120 may be formed on the first layer 110 while the steel sheet 200 passes between the roll coater 440 and the guide roller 450. The steel sheet 200 transferred to the coating apparatus 400 may be transferred to the curing apparatus 500 by at least one transfer roller (not shown). The second layer 120 of the coating layer 100 may be cured by ultraviolet rays while passing through the curing apparatus 500. The steel sheet 200 passing through the curing apparatus 500 may be collected by a collection roller (not shown).

A simple process line may be constructed by forming the coating layer 100 on the surface of the steel sheet 200 by the roll-to-roll method as described above.

As is apparent from the above, anti-fingerprinting and anti-scratch properties of an outer appearance of a home appliance can be improved by forming a coating layer, which is implemented by chemical bonding of silicon oxide and a silane coupling agent, on the surface of at least one of a main body and a door of the home appliance.

Also, a uniform coating layer of a thin film can be formed on the surface of a steel sheet by applying a roll-to-roll method to the entire process of forming a coating layer on the surface of the steel sheet forming an outer appearance of a home appliance.

The embodiments disclosed with reference to the accompanying drawings have been described above. However, it will be understood by those skilled in the art that various changes in form and details may be made therein without departing from the scope of the invention as defined by the appended claims.

## Claims

1. A home appliance comprising:
a main body including an internal space;
a door provided to open and close the internal space; and
a coating layer formed on at least one of the main body and the door,
wherein the coating layer includes:
a first layer provided to cover a surface of at least one of the main body and the door and including silicon oxide; and
a second layer provided to cover the first layer using an ultraviolet curing paint including an amino silane coupling agent, wherein
the main body and/or the door are formed of stainless steel.

2. The home appliance according to claim 1, wherein
a passive film layer is formed on the surface of at least one of the main body and the door, and
the first layer is formed on the passive film layer.

3. The home appliance according to any of claims 1 or 2, wherein
the coating layer has a thickness of 1µm or more and 2µm or less.

4. The home appliance according to any of the preceding claims , wherein
the ultraviolet curing paint further includes an oligomer, and
the oligomer includes a urethane acrylate.

5. The home appliance according to claim 4, wherein
the oligomer has a weight ratio (%) of 20 or more and 35 or less based on a weight ratio (%) of 100 of the ultraviolet curing paint.

6. The home appliance according to any of the preceding claims 4 or 5, wherein
the oligomer includes:
a 9-functional urethane acrylate having a weight ratio (%) of 10 or more and 15 or less based on a weight ratio (%) of 100 of the ultraviolet curing paint;
a 6-functional urethane acrylate having a weight ratio (%) of 10 or more and 15 or less based on a weight ratio (%) of 100 of the ultraviolet curing paint; and
a 2-functional urethane acrylate having a weight ratio (%) of 5 or less based on a weight ratio (%) of 100 of the ultraviolet curing paint.

7. The home appliance according to claim 6, wherein
the silane coupling agent has a weight ratio (%) of 3 or less based on a weight ratio (%) of 100 of the ultraviolet curing paint.

## Patentansprüche

1. Haushaltsgerät, umfassend:
einen Hauptkörper, der einen Innenraum umfasst;
eine Tür, die zum Öffnen und Schließen des Innenraums bereitgestellt ist; und
eine Beschichtungsschicht, die auf mindestens einem des Hauptkörpers und der Tür ausgebildet ist,
wobei die Beschichtungsschicht Folgendes umfasst:
eine erste Schicht, die zur Abdeckung einer Fläche mindestens eines des Hauptkörpers und der Tür vorgesehen ist und Siliziumoxid beinhaltet; und
eine zweite Schicht, die zur Abdeckung der ersten Schicht vorgesehen ist, unter Verwendung einer ultraviolett härtenden Farbe, die einen Aminosilanhaftvermittler beinhaltet, wobei
der Hauptkörper und/oder die Tür aus rostfreiem Stahl ausgebildet sind.

2. Haushaltsgerät nach Anspruch 1, wobei
auf der Fläche mindestens eines des Hauptkörpers und der Tür eine Passivfilmschicht ausgebildet ist, und
die erste Schicht auf der Passivfilmschicht ausgebildet ist.

3. Haushaltsgerät nach einem der Ansprüche 1 oder 2, wobei
die Beschichtungsschicht eine Dicke von 1 µm oder mehr und 2 µm oder weniger aufweist.

4. Haushaltsgerät nach einem der vorhergehenden Ansprüche, wobei
die ultraviolett härtende Farbe ferner ein Oligomer beinhaltet, und
das Oligomer ein Urethanacrylat beinhaltet.

5. Haushaltsgerät nach Anspruch 4, wobei
das Oligomer ein Gewichtsverhältnis (%) von 20 oder mehr und 35 oder weniger aufweist, basierend auf einem Gewichtsverhältnis (%) von 100 der ultraviolett härtenden Farbe.

6. Haushaltsgerät nach einem der vorhergehenden Ansprüche 4 oder 5, wobei
das Oligomer umfasst:
ein 9-funktionelles Urethanacrylat mit einem Gewichtsverhältnis (%) von 10 oder mehr und 15 oder weniger basierend auf einem Gewichtsverhältnis (%) von 100 der ultraviolett härtenden Farbe;
ein 6-funktionelles Urethanacrylat mit einem Gewichtsverhältnis (%) von 10 oder mehr und 15 oder weniger basierend auf einem Gewichtsverhältnis (%) von 100 der ultraviolett härtenden Farbe; und
ein 2-funktionelles Urethanacrylat mit einem Gewichtsverhältnis (%) von 5 oder weniger basierend auf einem Gewichtsverhältnis (%) von 100 der ultraviolett härtenden Farbe.

7. Haushaltsgerät nach Anspruch 6, wobei
der Silanhaftvermittler ein Gewichtsverhältnis (%) von 3 oder weniger basierend auf einem Gewichtsverhältnis (%) von 100 der ultraviolett härtenden Farbe aufweist.

## Revendications

1. Appareil ménager comprenant :
un corps principal comprenant un espace interne ;
une porte permettant d'ouvrir et de fermer l'espace interne ;
une couche de revêtement formée sur au moins l'un du corps principal et de la porte,
dans lequel la couche de revêtement comprend :
une première couche prévue pour recouvrir une surface d'au moins l'un du corps principal et de la porte et comprenant de l'oxyde de silicium ; et
une seconde couche prévue pour recouvrir la première couche à l'aide d'une peinture durcissant aux ultraviolets et comprenant un agent de couplage amino-silane, dans laquelle
le corps principal et/ou la porte sont en acier inoxydable.

2. Appareil ménager de la revendication 1, dans lequel
une couche de film passif est formée sur la surface d'au moins l'un du corps principal ou de la porte, et
la première couche est formée sur la couche de film passif.

3. Appareil ménager de l'une quelconque des revendications 1 ou 2, dans lequel
la couche de revêtement a une épaisseur de 1 µm ou plus et de 2 µm ou moins.

4. Appareil ménager de l'une quelconque des revendications précédentes, dans lequel
la peinture durcissant aux ultraviolets comprend en outre un oligomère, et
l'oligomère comprend un acrylate d'uréthane.

5. Appareil ménager de la revendication 4, dans lequel
l'oligomère a un rapport en poids (%) de 20 ou plus et de 35 ou moins basé sur un rapport en poids (%) de 100 de la peinture durcissant aux ultraviolets.

6. Appareil ménager de l'une quelconque des revendications précédentes 4 ou 5, dans lequel
l'oligomère comprend :
un acrylate d'uréthane à 9 fonctions ayant un rapport en poids (%) de 10 ou plus et de 15 ou moins basé sur un rapport en poids (%) de 100 de la peinture durcissant aux ultraviolets ;
un acrylate d'uréthane à 6 fonctions ayant un rapport en poids (%) de 10 ou plus et de 15 ou moins basé sur un rapport en poids (%) de 100 de la peinture durcissant aux ultraviolets ; et
un acrylate d'uréthane à 2 fonctions ayant un rapport en poids (%) de 5 ou moins basé sur un rapport en poids (%) de 100 de la peinture durcissant aux ultraviolets.

7. Appareil ménager de la revendication 6, dans lequel
l'agent de couplage silane a un rapport en poids (%) de 3 ou moins basé sur un rapport en poids (%) de 100 de la peinture durcissant aux ultraviolets.
